# DEMANDE DE BREVET EUROPEEN

(11) **EP 0 980 983 A1**
(43) Date de publication de la demande: **23.02.2000**
(21) Numéro de dépôt: 99450017.1
(22) Date de dépôt: 12.08.1999
(51) Int. Cl.: F16B 12/22, A47B 57/40

(54) **Dispositif de fixation amovible de deux éléments plats, notamment de chants d'une étagère sur des montants**

(30) Priorité: 14.08.1998 FR 9810516
(71) Demandeur: Servary, 40230 Saint Vincent de Tyrosse (FR)
(72) Inventeur: Servary, Jean-Francois, 40230 Saint Vincent de Tyrosse (FR); Servary, Pierre, 40150 Hossegor (FR)
(74) Mandataire: Thébault, Jean-Louis

(57) **Abrégé**

- L'objet de l'invention est un dispositif de fixation amovible de deux éléments plats, notamment de chants (16) d'étagères (10) sur des montants (12), les chants des étagères comprenant des ergots (14) en saillie et les montants comprenant des trous (30) de réception de ces ergots, caractérisé en ce que chaque ergot (14) comprend des oreilles (14-1, 14-2) parallèles et décalées en hauteur (h) par rapport au plan du chant qui le porte, chacune ayant la forme d'une portion de disque et étant séparées par une zone intermédiaire dont l'axe longitudinal est orienté parallèlement au sens F d'introduction et en ce que chaque trou (30) de réception ménagé dans le montant est composé d'une découpe (32) circulaire de diamètre adapté à l'encombrement desdites oreilles et d'une fente (34) débouchant dans et sous ladite découpe, dans le sens F d'introduction.
- Le système peut aussi être inversé.

## Description

La présente invention concerne un dispositif de fixation de deux éléments plats, notamment de chants d'une étagère sur des montants, plus spécifiquement dans le cas de systèmes métalliques.

On connaît par le brevet US-A-2 147 759 un moyen d'accrochage d'étagères sur des montants qui est simple. Il s'agit de pattes obtenues par emboutissage de la tôle dans laquelle est réalisée le montant qui forme un crochet plat, ces pattes étant prévues pour recevoir des crevés ménagés dans les chants des étagères.

Le brevet US-A-3 240 352 décrit un agencement qui reprend les caractéristiques du précédent mais qui le perfectionne en apportant des moyens de verrouillage notamment des pattes pivotantes qui bloque le crevé sur la patte après emboîtement ce qui interdit le retrait de l'étagère.

La demande de brevet DE-A-1 554 465 décrit un agencement de fixation d'étagères sur des montants qui comprend des tôles pliées sur elles-mêmes en sorte de réaliser des crochets tant sur les montants que sur les tôles, les formes étant de type triangulaire ou pour le moins trapézoïdale en sorte d'obtenir des effets de coin.

On connaît aussi par la demande de brevet EP-A-75223, un autre dispositif de fixation d'une étagère sur des montants.

Ce dispositif comprend :
- dans chaque montant, au moins un trou ayant une ouverture d'une dimension donnée qui se prolonge en partie inférieure par une fente d'une autre dimension, inférieure à celle du trou
- sur la tranche de l'étagère, en une position adaptée, un ergot d'accrochage prévu pour coopérer avec le trou du montant.

Plus particulièrement, l'ergot est en forme de demi-anneau, en saillie par rapport au plan du chant de l'étagère dont il est issu, cet anneau comportant de plus un plat transversal, disposé tangent à l'anneau, au point de saillie maximale. Un tel ergot est généralement venu d'emboutissage, à partir de la tôle dans laquelle est réalisée l'étagère et son chant.

Une variante décrit un assemblage avec un ergot à ailes de forme triangulaire qui coopèrent avec un trou ayant également une forme triangulaire.

Dans l'ensemble des modes de réalisation présentés, les ergots ont une surface réduite d'appui mécanique par rapport à l'ensemble des découpes et surtout, il présente des angles en saillie qui peuvent présenter des risques de blessure pour les utilisateurs.

La présente invention a pour but de pallier ces différents inconvénients et propose un dispositif à forte surface de retenue mécanique, qui évite les risques de blessure lors du maniement, qui est très simple de fabrication, qui est facile à positionner, qui peut être réversible moyennant une modification mineure et qui est d'un coût de fabrication réduit.

A cet effet, le dispositif de fixation amovible de deux éléments plats, notamment de chants d'étagères sur des montants, les chants des étagères comprenant des ergots en saillie et les montants comprenant des trous de réception de ces ergots, se caractérise en ce que chaque ergot comprend des oreilles parallèles et décalées en hauteur (h) par rapport au plan du chant qui le porte, chacune ayant la forme d'une portion de disque et étant séparées par une zone intermédiaire dont l'axe longitudinal est orienté parallèlement au sens F d'introduction et en ce que chaque trou de réception ménagé dans le montant est composé d'une découpe circulaire de diamètre adapté à l'encombrement desdites oreilles et d'une fente débouchant dans et sous ladite découpe, dans le sens F d'introduction.

Moyennant une simple modification de l'orientation d'une fente, le dispositif peut être inversé et les montants portent alors les ergots tandis que les étagères portent les trous.

Plus particulièrement, les oreilles sont venues d'emboutissage à partir d'une découpe oblongue en sorte que les oreilles s'inscrivent sensiblement dans un cercle.

Suivant une autre caractéristique, les oreilles sont solidaires du chant ou du montant par des faces de liaison perpendiculaires au plan dudit chant ou dudit montant, sur toute la longueur de la zone intermédiaire.

Quant à la largeur l de la distance entre les deux faces de liaison mesurée à l'extérieur, elle est inférieure à la largeur L de la fente pour des raisons d'ajustement et de maintien.

Pour des raisons de montage/démontage, la hauteur (h) de décalage des oreilles est supérieure à l'épaisseur (e) de l'élément dans lequel sont ménagés les trous de réception des ergots.

La présente invention est maintenant décrite en détail selon un mode de fabrication particulier, en regard des dessins annexés sur lesquels les différentes figures représentent :
- figure 1, une vue en perspective d'une étagère et d'un montant équipés du dispositif de fixation amovible selon l'invention,
- figure 2, une vue de détail de la partie mâle du dispositif,
- figure 3, une vue de dessus de la partie mâle du dispositif,
- figure 4, une vue en coupe médiane de la partie mâle du dispositif,
- figures 5A, 5B un synoptique de la mise en oeuvre du dispositif selon l'invention, et
- figure 6, une variante de réalisation dans laquelle les ergots sont portés par les montants et les trous de réception par les étagères.

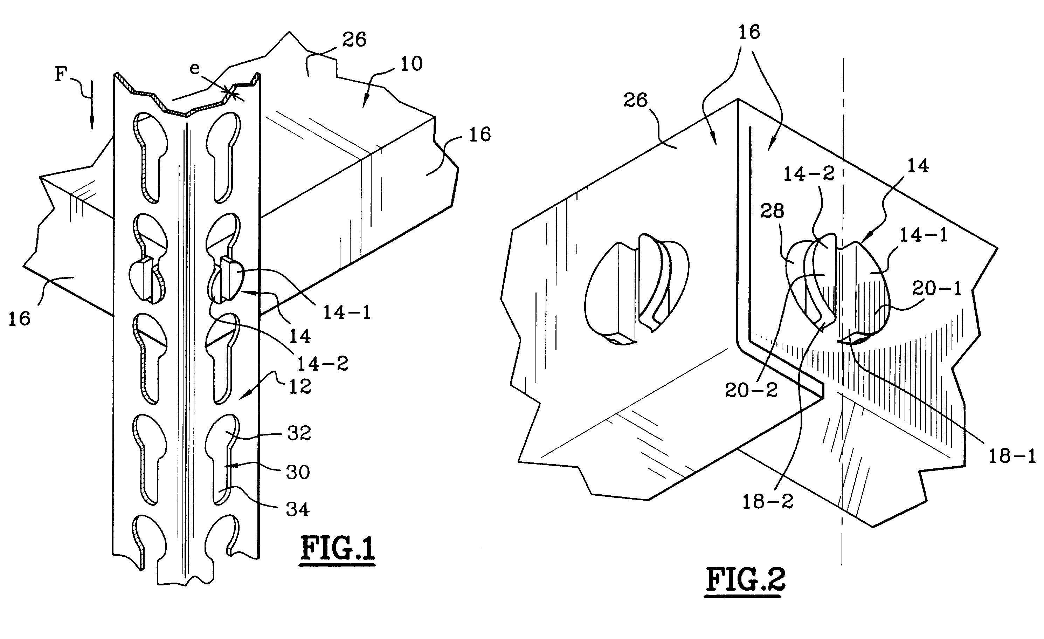

Sur la figure 1, on a montré une vue partielle d'une étagère 10 montée sur un montant 12.

L'étagère comprend des ergots 14 à oreilles 14-1 et 14-2, visibles en détail sur les figures 2, 3 et 4. Ces oreilles sont en saillie par rapport au plan du chant 16 de l'étagère. Elles sont réalisées de préférence par emboutissage, dans l'épaisseur même de la tôle constituant l'étagère.

Ces oreilles comprennent chacune une face 18-1, 18-2 de liaison, perpendiculaire au plan du chant duquel elle est issue et une face 20-1, 20-2 parallèle au plan de ce chant.

Les deux oreilles sont orientées avec les faces perpendiculaires dos à dos et séparées par une zone 22 intermédiaire, non déformée qui subsiste dans le plan du chant. Cette zone intermédiaire est orientée avec son axe 24 longitudinal perpendiculaire au plan 26 de l'étagère.

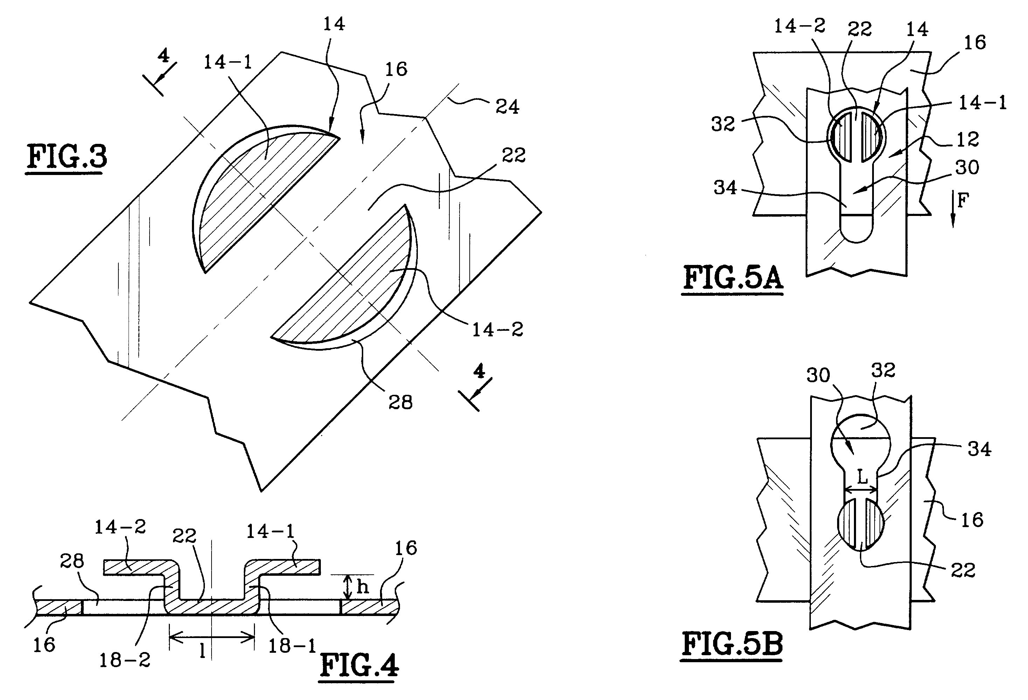

Comme cela est plus visible sur les figures 3 et 4, les oreilles étant issus du chant, la découpe 28, plus spécifiquement oblongue dans son dessin, laissée après emboutissage est de dimensions supérieures à l'encombrement des oreilles pour que l'encombrement des oreilles s'inscrive sensiblement dans un cercle de diamètre égal à la longueur de la zone 22 intermédiaire.

On note que la découpe 28 oblongue et la présence de la zone intermédiaire confèrent aux oreilles 14-1 et 14-2 une forme de secteur de disque, ce qui est particulièrement important.

Le montant comprend quant à lui une succession de trous 30, prévus pour recevoir les ergots 14 à oreilles. Ces trous ont un profil constitué d'une découpe 32 circulaire de diamètre un peu supérieur à celui de l'encombrement des oreilles des ergots, ceci pour le confort de mise en oeuvre comme cela sera expliqué ultérieurement.

Suivant l'axe longitudinal du montant, vers le bas, c'est à dire dans le sens d'introduction indiqué par la flèche F , le trou 30 se prolonge par une fente 34 qui débouche dans la découpe 32 circulaire pour constituer un seul et même trou. Les angles à la jonction de la fente et de la découpe circulaire sont de type à congés naturels et ne nécessitent aucune reprise supplémentaire.

La largeur L de la fente est adaptée en fonction de la largeur l prise entre les faces 18-1 et 18-2 de liaison, mesurée extérieurement, pour assurer un coulissement ajusté de chaque ergot à oreilles dans la fente correspondante.

En fonction de l'épaisseur de la tôle dans laquelle est réalisé le montant, il convient d'adapter la hauteur h des faces 18-1 et 18-2 de liaison pour permettre un montage/démontage aisé dans tous les cas.

Le dispositif selon l'invention présente de nombreux avantages. Tout d'abord, la forme particulière des oreilles évite la formation de points anguleux susceptibles de provoquer des blessures à l'utilisateur.

De plus, la surface d'appui des oreilles sur laquelle la reprise des efforts est reportée se trouve être importante, ce qui autorise des charges plus importantes pour une épaisseur de tôle adaptée, ce qui assure une meilleure répartition et surtout une meilleure immobilisation et un meilleur équerrage de l'étagère sur le montant.

Le synoptique des figures 5A et 5B montre aussi que la forme circulaire tant de la découpe du trou de réception du montant que des oreilles de l'ergot permet un montage aisé par un centrage initial facile, ceci même quand l'étagère est inclinée, voir figure 5A.

Une fois les quatre ou huit ergots centrés, dans le cas où l'étagère est munie d'autant de points de fixation, il suffit de faire subir à l'étagère une translation ce qui translate simultanément les ergots le long des fentes qui assurent un guidage du mouvement.

Une fois dans la position montrée figure 5B, les étagères maintiennent un équerrage parfait des montants. On note que les faces 18-1 et 18-2 de liaison assurent un guidage continu le long de la fente, ce qui est évite tout coincement et toute mise en biais comme dans les crevés des agencements de l'art antérieur. Après montage final, ces faces 18-1 et 18-2 de liaison assurent une reprise aisée des efforts importants d'équerrage. Compte tenu de la faible hauteur de ces faces de liaison, une faible épaisseur de tôle assure une reprise d'efforts importants.

De même, la reprise de la charge portée par l'étagère est assurée par ces mêmes faces 18-1 et 18-2 qui travaillent sur la tranche, si bien que le moment d'inertie est très important puisque la hauteur prise en compte pour être portée à la puissance 4 est sensiblement le diamètre du cercle virtuel d'encombrement des oreilles, ceci réparti sur au moins huit points, seize au maximum.

Le dispositif selon la présente invention est particulièrement adapté pour une fabrication en série à des coûts de production très compétitifs. Les ergots à oreilles sont également peu saillants si bien que le conditionnement est aisé à réaliser et demande moins de précautions que les dispositifs connus de l'art antérieur. Le fait de disposer de surfaces planes, notamment celles des oreilles autorisent un emboîtement plus satisfaisant des différentes pièces pour la constitution de colis.

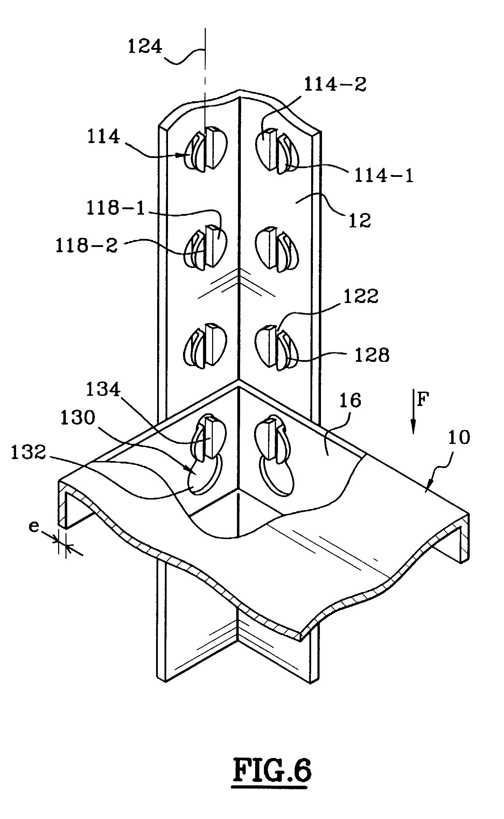

Les ergots ont été représentés portés par les étagères et les trous ménagés dans les montants mais l'inverse est possible. Ceci est représenté sur la figure 6. Les différents éléments du dispositif portent des références identiques mais augmentées de 100.

Il convient uniquement de changer l'orientation de la fente 134 du trou 130 de l'étagère qui doit être dirigée vers le haut par rapport à la découpe 132 circulaire et par rapport au sens F d'emboîtement.

Les ergots 114 sont strictement identiques aux ergots 14 du premier agencement, tout comme les oreilles 114-1 et 114-2 et la zone intermédiaire 122.

Les mêmes avantages énumérés précédemment se retrouvent intégralement dans cet agencement inverse qui se trouve donc être strictement équivalent.

Dans les modes de réalisation visant la reprise de charges lourdes, il est avantageux de prévoir des étagères ayant des paires d'ergots décalés en hauteur, sur chaque chant, à chacune des extrémités, ce qui conduit à disposer de 16 ergots par étagère.

## Revendications

1. Dispositif de fixation amovible de deux éléments plats, notamment de chants (16) d'étagères (10) sur des montants (12), les chants des étagères comprenant des ergots (14) en saillie et les montants comprenant des trous (30) de réception de ces ergots, caractérisé en ce que chaque ergot (14) comprend des oreilles (14-1, 14-2) parallèles et décalées en hauteur (h) par rapport au plan du chant qui le porte, chacune ayant la forme d'une portion de disque et étant séparées par une zone (22) intermédiaire dont l'axe (24) longitudinal est orienté parallèlement au sens F d'introduction et en ce que chaque trou (30) de réception ménagé dans le montant est composé d'une découpe (32) circulaire de diamètre adapté à l'encombrement desdites oreilles et d'une fente (34) débouchant dans et sous ladite découpe, dans le sens F d'introduction.

2. Dispositif de fixation amovible de deux éléments plats, notamment de chants (16) d'étagères (10) sur des montants (12), les montants comprenant des ergots (114) en saillie et les chants (16) des étagères comprenant des trous (130) de réception de ces ergots, caractérisé en ce que chaque ergot (114) comprend des oreilles (114-1, 114-2) parallèles et décalées en hauteur (h) par rapport au plan du montant qui le porte, chacune ayant la forme d'une portion de disque et étant séparées par une zone (122) intermédiaire dont l'axe (124) longitudinal est orienté parallèlement au sens F d'introduction et en ce que chaque trou (130) de réception ménagé dans le chant de l'étagère est composé d'une découpe (132) circulaire de diamètre adapté à l'encombrement desdites oreilles et d'une fente (134) débouchant dans et sous ladite découpe, dans le sens F d'introduction.

3. Dispositif de fixation amovible selon la revendication 1 ou 2, caractérisé en ce que les oreilles sont venues d'emboutissage à partir d'une découpe (28, 128) oblongue en sorte que les oreilles s'inscrivent sensiblement dans un cercle.

4. Dispositif de fixation amovible selon l'une quelconque des revendications précédentes, caractérisé en ce que les oreilles (14-1, 14-2;114-1, 114-2) sont solidaires du chant (16) de l'étagère (10) ou du montant (12) par des faces de liaison perpendiculaires au plan dudit chant ou dudit montant, sur toute la longueur de la zone intermédiaire.

5. Dispositif de fixation amovible selon l'une quelconque des revendications précédentes, caractérisé en ce que la largeur l de la distance entre les deux faces (18-1, 18-2; 118-1, 118-2) de liaison mesurée à l'extérieur est inférieure à la largeur L de la fente (30, 130).

6. Dispositif de fixation amovible selon l'une quelconque des revendications précédentes, caractérisé en ce que la hauteur (h) de décalage des oreilles est supérieure à l'épaisseur (e) de l'élément dans lequel sont ménagés les trous de réception des ergots.
